# EUROPEAN PATENT SPECIFICATION

(11) **EP 0 904 876 B1**
(45) Date of publication and mention of the grant of the patent: **21.07.2004**
(21) Application number: 98116954.3
(22) Date of filing: 08.09.1998
(51) Int. Cl.: B23B 31/117

(54) **Chuck**
Spannfutter
Mandrin

(30) Priority: 26.09.1997 JP 26134497
(43) Date of publication of application: 31.03.1999
(73) Proprietor: Daishowa Seiki Co., Ltd., Higashiosaka-shi, Osaka 579-8013 (JP)
(72) Inventor: Komine, Tsuyoshi, Daishowa Seiki Co., Ltd., Higashiosaka-shi, Osaka 579-8013 (JP)
(74) Representative: HOFFMANN - EITLE

(56) References cited:
- EP-A- 0 561 395
- DE-A- 3 517 246
- GB-A- 2 322 316
- US-A- 4 721 423

## Description

### BACKGROUND OF THE INVENTION

### Field of the Invention

The present invention relates generally to a chuck suitable for gripping a tool of a drill, end mill and so forth according to the preamble of independent claim 1, as is known from document DE 35 17 246 A. More particularly, the invention relates to a chuck, in which a chuck cylinder having an outer periphery tapered toward a tip end side of a chuck body, is projected, a flange portion is formed on the base end side of the chuck cylinder, a tightening rotary cylinder having a tapered inner peripheral surface is externally fitted on the chuck cylinder, and a plurality of needle rollers causing orbital motion in spiral fashion are disposed between the tightening rotary cylinder and the chuck cylinder.

### Description of the Related Art

Fig. 3 shows a conventional chuck. The chuck is designed to insert a base end portion of a tool (not shown) into a chuck cylinder 2 of a chuck body 1, and the tightening rotary cylinder 4 externally fitted on the tapered outer peripheral surface of the chuck cylinder 2 via the needle rollers 3 is rotated in a direction approaching to the flange portion 5 of the chuck body 1 to contract a diameter of the chuck cylinder 2 to firmly grip and fasten the tool. The conventional chuck is constructed to leave a proper length of gap S between a base end surface 4a of the tightening rotary cylinder 4 and a tip end surface 5a of the flange portion 5 on the side of the chuck body in a condition where the tool is sufficiently gripped and fixed.

In general, in the chuck of this type, it has been said that shorter an under head length Nc corresponding to a length in the axial direction from the tip end surface of the tightening rotary cylinder 4 to the rear end portion of the flange portion 5 on the side of the chuck body in the condition where the tool is gripped and fixed, achieves higher rigidity of the chuck to improve machining precision. However, in case of the conventional chuck, in the condition sufficiently gripping and fixing the tool, since a proper gap S between the base end surface 4a of the tightening rotary cylinder 4 and the tip end surface 5a of the flange portion 5, the under head length Nc is expanded for the length corresponding at least to the gap S to lower rigidity of the chuck correspondingly.

DE 35 17 246 A1 discloses a similar chuck, in which the diameter of the rotary cylinder is smaller than the diameter of the flange portion.

### SUMMARY OF THE INVENTION

The present invention has been worked out to solve the problem set forth above. It is an object of the present invention to increase rigidity of a chuck including extremely shortening an under head length.

Another object of the present invention is to make an under head length of the chuck shorter than the under head length of the conventional chuck.

A further object of the present invention is to provide increased contact area when the rear end surface of the tightening rotary cylinder abuts with the tip end surface of the flange portion to increase rigidity of the chuck, to avoid interference between the tip end portion of the tightening rotary cylinder with the surrounding and to facilitate production.

These objects are solved by means of the chuck according to claim 1. A preferred embodiment of the inventive chuck is described in the dependent claim.

An axial length of the flange portion of the chuck body may be shorter than a dimension defined in a dimension defined by Japanese industrial standard.

### BRIEF DESCRIPTION OF THE DRAWINGS

The present invention will be understood more fully from the detailed description given herebelow and from the accompanying drawings of the preferred embodiment of the present invention, which, however, should not be taken to be limitative to the invention, but are for explanation and understanding only.

In the drawings:
Fig. 1 is an illustration of one embodiment of a chuck according to the present invention, in which an upper half is a longitudinal section showing a condition before tightening a tightening rotary cylinder, and a lower half shows a condition after sufficiently tightening the tightening rotary cylinder;
Fig. 2 is an illustration of another embodiment of a chuck similar to Fig. 1; and
Fig. 3 is an illustration of the conventional chuck in the condition where the tightening rotary cylinder is sufficiently tightened.

### DESCRIPTION OF THE PREFERRED EMBODIMENT

The present invention will be discussed hereinafter in detail in terms of the preferred embodiment of the present invention with reference to the accompanying drawings. In the following description, numerous specific details are set forth in order to provide a thorough understanding of the present invention. It will be obvious, however, to those skilled in the art that the present invention may be practiced without these specific details. In other instance, well-known structures are not shown in detail in order to avoid unnecessarily obscure the present invention.

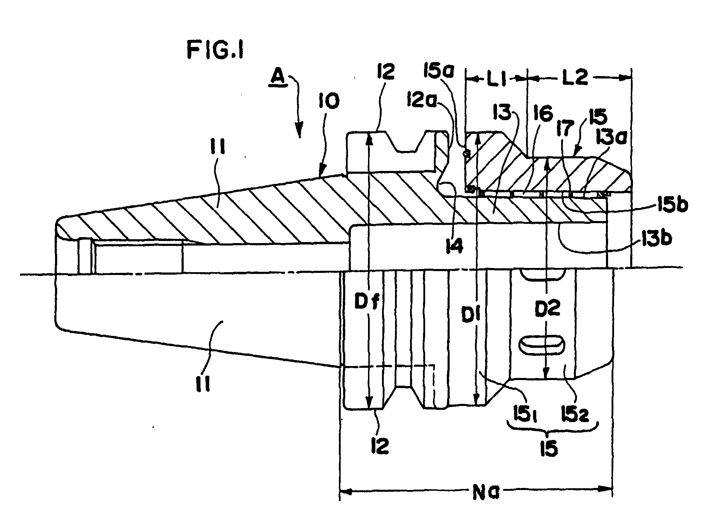

In one embodiment of a chuck A according to the present invention, as shown in Fig. 1, a chuck body 10 includes a taper shank portion 11 fitted on a main shaft (not shown) of a machining center or so forth, a flange portion 12 formed on a large diameter side end portion of the taper shank portion11 and a chuck cylinder 13 integrally projected coaxially from the flange portion 12 to the tip end side of the chuck body 10. The chuck cylinder 13 has a straight inner peripheral surface 13b corresponding to a straight shank portion (not shown) of the tool to be gripped and fixed, and a tapered outer peripheral surface 13a reducing diameter toward a tip end. At a corner portion between the outer peripheral surface 13a of the chuck cylinder 13 and the tip end surface of the flange portion 12, a groove form cut-out 14 for good resilient deformation.

As shown, a tightening rotary cylinder 15 has a diameter on a rear end portion side 15₁ than that on a tip end portion side 15₂. An external diameter D1 of the rear end surface 15a of the rotary cylinder 15 is formed to be slightly smaller than an external diameter Df of the flange portion 12 of the chuck body 10. It should be noted that the external diameter D1 of the rear end surface 15a of the tightening rotary cylinder may be formed the same as the external diameter Df of the flange portion 12. Then, in the tightening rotary cylinder 15, it is preferred that a ratio between the smaller diameter end side, namely the external diameter D2' of the tip end portion side 15₂ and the larger diameter end side, namely the external diameter D1 of the rear end portion side 15₁ is in a range of 0.75 to 0.85. Also, it is preferred that a ratio (L1/L2) of a length L1 of the larger diameter rear end portion side 15₁ in the axial direction and a length L2 of the smaller diameter tip end portion side 15₂ is in a range of 0.60 to 0.85.

On the other hand, the tightening rotary cylinder 15 has a tapered inner peripheral surface 15b tapered to reduce diameter toward the tip end corresponding to the tapered outer peripheral surface 13a of the chuck cylinder 13. Between the tightening rotary cylinder 15 and the chuck cylinder 13, a plurality of needle rollers 16 which causes orbital motion in spiral fashion with respect to the tapered outer peripheral surface 13a of the chuck cylinder 13, is disposed. The needle roller 16 is held in a retainer 17. With respect to a generating line of the outer peripheral surface 13a of the chuck cylinder 13, an axis of each needle roller 16 is arranged with an appropriate inclination. The needle roller 16 causes orbital motion in spiral direction with rotation with respect to the tapered outer peripheral surface 13a of the chuck cylinder 13 to ride on the tapered outer peripheral surface 13a. By this, the chuck cylinder 13 reduces the diameter resiliently to grip and fix the tool. Then, the tightening rotary cylinder 15 contacts the rear end surface 15a thereof with the tip end surface 12a of the flange portion 12 in a condition where the chuck cylinder 13 reduces a diameter via the needle roller 16 by rotation in the tightening direction to sufficiently grip and fix the tool. It should be noted that the upper half above the center axis of Fig. 1 shows a section in a condition not yet tightened the tightening rotary cylinder 15, and the lower half shows a side elevation in a condition contacting the rear end surface 16a of the tightening rotary shaft 15 with the tip end surface 12a of the flange portion 12 by completely tightening the tightening rotary cylinder 15.

With the chuck A discussed with reference to Fig. 1, the rear end surface 15a of the rotary cylinder 15 contacts with the tip end surface 12a of the flange portion 12 by rotating the tightening rotary cylinder 15 in the tightening direction to reduce diameter of the chuck cylinder 13 via the needle rollers 16 to sufficiently grip and fix the tool. In comparison with the conventional chuck C shown in Fig. 3, assuming that the lengths of the tightening rotary cylinder and the flange portion in the axial direction are the same, the rear end surface 15a of the tightening rotary shaft 15 of the shown embodiment of the chuck A according to the invention contacts with the tip end surface 12a of the flange portion 12 to eliminate the gap. Thus, the under head length Na of the chuck A becomes shorter than the under head length Nc of the conventional chuck C in the corresponding amount to increase the rigidity of the chuck.

On the other hand, the rear end portion side 15₁ of the tightening rotary cylinder 15 is formed with a diameter larger than the tip end portion side 15₂, and in conjunction therewith, the outer diameter D1 of the rear end surface is the same as the outer diameter Df of the flange portion 12 of the chuck body 10 or slightly smaller. When the rear end surface 15a of the tightening rotary cylinder 15 contacts with the tip end surface 12a of the flange portion 12 to provide extremely large contact area to further increase rigidity of the chuck. On the other hand, since the tip end portion side 15₂ of the tightening rotary cylinder 15 is smaller in diameter than the rear end portion side 15₁, interference with the surrounding of the tip end portion of the tightening rotary cylinder 15 during cutting process becomes small to facilitate operation.

In this case, the reason why the tightening rotary cylinder 15 is formed to have a ratio (D2/D1) of the outer diameter D1 of the larger diameter end portion side 15₁ and the outer diameter D2 of the smaller diameter end portion side 15₂ within a range of 0.75 to 0.85, is that the outer diameter D1 of the rear end surface 15a of the rotary cylinder 15 is substantially equal to the outer diameter Df of the flange portion 12 of the chuck body 10, and that if the diameter on the tip end portion side 15₂ is excessively small, rigidity and strength of the rotary cylinder 15 per se is lowered, and if the diameter of the tip end portion side 15₂ is excessively large, a problem should be encountered to cause interference with the surrounding. In order to avoid lowering of rigidity of the tightening rotary cylinder 15 per se, D2/D1 has to be greater than or equal to 0.75. On the other hand, in order to avoid a problem in interference, D2/D1 has to be less than or equal to 0.85.

The reason why the ratio (L1/L2) of the length L1 of the rear end portion side 15₁ in the axial direction and the length L2 of the tip end portion side 15₂ in the axial direction is preferably in a range of 0.60 to 0.85, is that a problem of interference is caused, and when the length L2 of the tip end portion side 15₂ is too short, and when the length L1 of the rear end portion side 15₁ is too short with respect to the length L2 of the tip end portion side 15₂, a problem of deformation or so forth may be caused on the rear end portion side 15₁ upon depression of the rear end surface 15a of the rotary cylinder 15 onto the flange portion 12 by tightening the tightening rotary cylinder 15. Therefore, by setting L1/L2 within a range of 0.60 to 0.85, both problems are resolved.

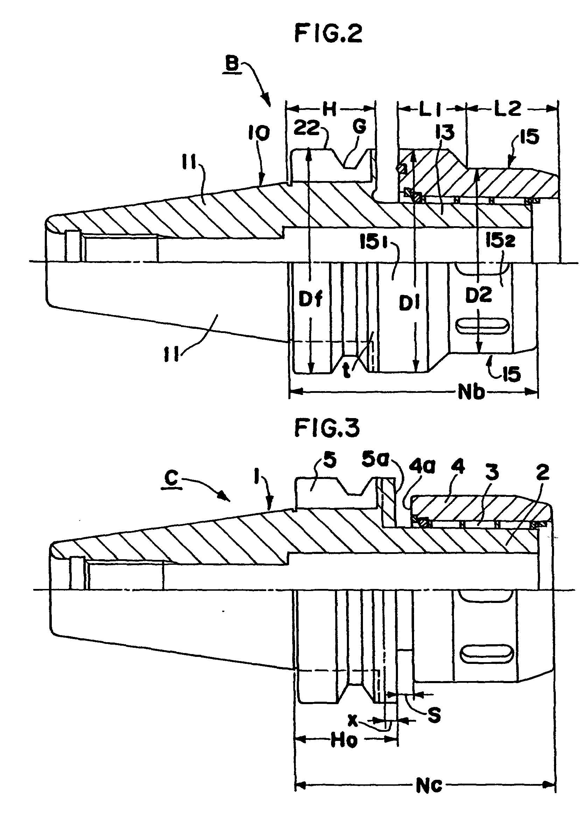

Fig 2 shows another embodiment of a chuck B according to the present invention. The chuck B is characterized in that the length H of a flange portion 22 of the chuck body 10 in the axial direction is formed to be shorter than a dimension Ho defined in Japanese industrial standard (see Fig. 3). The shown embodiment has the same construction as the chuck A shown in Fig. 1, except for the foregoing point. The tightening rotary cylinder 15 is tightened for contacting the rear end surface 15a with the end surface of the flange portion 22. The diameter of the rear end portion side 15₁ is greater than that of the tip end portion side 15₂, the outer diameter D1 of the rear end surface 15a is the same as the outer diameter Df of the flange portion 22 of the chuck body 10 or slightly smaller than the latter, a ratio (D2/D1) between the outer diameter D1 of the rear end portion side 15₁ and the outer diameter D2 of the tip end portion side 15₂ is in a range of 0.75 to 0.85, and a ratio (L1/L2) between the axial length L1 of the rear end portion side 15₁ and the axial length L2 of the tip end portion side 15₂ is in a range of 0.60 to 0.85.

In the chuck B, since the axial length H of the flange portion 22 of the chuck 10 is shorter than the dimension defined in the Japanese industrial standard, the under head length Nb of the chuck B can be further shortened than the under head length Na of the chuck A shown in Fig. 1 for the corresponding length to further enhance the rigidity of the chuck. In the outer peripheral surface of the flange portion 22, a gripping groove G for manipulator is provided so that an engaging portion of the manipulator may engage with the groove G upon griping operation of the chuck body 10 by the manipulator. Also, since supporting rollers are slidingly contacted over the outer peripheral surface of both sides of the groove G, when the axial length H of the flange portion 22 is formed to be shorter, the outer peripheral portion t on one side of the gripping groove G is required to form at least a given width of the outer peripheral surface to permit the supporting roller to slidingly contact.
It should be noted that, by the shown embodiment of the present invention, since the axial length of the flange portion of the chuck body is formed to be shorter than the dimension defined by Japanese industrial standard in the predetermined length, the under head length of the chuck can be shorted in the corresponding amount to further enhance rigidity of the chuck.

With the shown embodiments of the present invention, by setting the ratio (D2/D1) between the outer diameter D1 of the larger diameter end portion side of the tightening rotary cylinder and the outer diameter D2 of the smaller diameter end portion side within the range of 0.75 to 0.85, lowering of rigidity of the tightening rotary cylinder per se will never be caused, and interference of the tightening rotary cylinder to the surrounding can be avoided as much as possible.

Furthermore, with the shown embodiment of the present invention set forth above, by setting the ratio (L1/L2) of the axial length L1 of the larger diameter end portion side of the tightening rotary cylinder and the axial length L2 of the smaller diameter end portion side in a range of 0.60 to 0.85, the problem of interference can be avoided to certainly provide sufficient rigidity and strength of the tightening rotary cylinder per se.

Although the present invention has been illustrated and described with respect to exemplary embodiment thereof, it should be understood by those skilled in the art that the foregoing and various other changes, omissions and additions may be made therein and thereto, without departing from the scope of the present invention. Therefore, the present invention should not be understood as limited to the specific embodiment set out above but to include all possible embodiments which can be embodied within a scope encompassed and equivalents thereof with respect to the feature set out in the appended independent claim.

## Claims

1. A chuck comprising a chuck body (10) including a taper shank portion (11), a flange portion (12) fitted on a large diameter side end portion of said taper shank portion (11) and a chuck cylinder (13), for gripping and fixing a tool, projecting from the flange portion (12) to the tip end side of the chuck body (10) and having a tapered outer peripheral surface (13a) ,
a tightening rotary cylinder (15) having a tapered inner peripheral surface (15b) and being externally fitted on said chuck cylinder (13),
wherein a plurality of needle rollers (16) are disposed between the chuck cylinder (13) and the rotary cylinder (15) so as to be able to cause orbital motion in a spiral fashion of the rotary cylinder (15) with respect to the chuck cylinder (13),
wherein the rotary cylinder (15) has a rear end portion side (15₁) provided with a diameter (D1) greater than the diameter (D2) of a tip end portion side (15₂) of the rotary cylinder, the diameter (D1) on the rear end surface (15a) of said rotary cylinder being slightly smaller than or equal to an outer diameter (Df) of the flange portion (12), said rotary cylinder being able to be tightened to abut the rear end surface (15a) with an end surface (12a) of said flange portion (12),
**characterized in that**,
the ratio (D2/D1) of the outer diameter (D2) of the said smaller diameter tip end portion side (15₂) and the outer diameter (D1) of the said larger diameter rear end portion side (15₁) is within the range 0.75 to 0.85 and
the ratio (L1/L2) of the axial length (L1) of the said larger diameter rear end portion side (15₁) and the axial length (L2) of the said smaller diameter tip end portion side (15₂) is within the range 0.60 to 0.85.

2. The chuck as set forth in claim 1, wherein the chuck body (10) is provided with a groove-like recessed cutoff (14) at a corner in which the outer peripheral surface (13a) of the chuck cylinder (13) intersects the front side end face (12a) of the flange portion (12).

## Patentansprüche

1. Spannfutter, umfassend einen Spannfutter-Körper (10) mit einem konischen Schaftabschnitt (11), einem an einem Seitenendabschnitt des konischen Schaftabschnitts (11) mit großem Durchmesser befestigten Flanschabschnitt (12) und einem Spannfutter-Zylinder (13) zum Erfassen und Fixieren eines Werkzeugs, welcher von dem Flanschabschnitt (12) zu der spitzen Endseite des Spannfutter-Körpers (10) hervorragt und eine konische äußere Umfangsfläche (13) aufweist,
mit einem Anzieh-Rotationszylinder (15), der eine konische innere Umfangsoberfläche (15b) aufweist und außen an dem Spannfutter-Zylinder (13) befestigt ist,
wobei eine Vielzahl von Nadel-Rollenkörpern (16) zwischen dem Spannfutter-Zylinder (13) und dem Rotationszylinder (15) angeordnet sind, so dass sie in der Lage sind, eine kreisförmige Bewegung des Rotations-Zylinders (15) in Bezug auf den Spannfutter-Zylinder (13) in einer spiralförmigen Weise zu bewirken,
wobei der Rotations-Zylinder (15) eine mit einem Durchmesser (D1), der größer als der Durchmesser (D2) einer spitzen Endabschnittseite (15₂) des Rotationszylinders versehenen rückwärtigen Endabschnittseite (15₁) aufweist, wobei der Durchmesser (D1) an der rückwärtigen Endoberfläche (15a) des Rotations-Zylinders etwas kleiner als oder gleich einem äußeren Durchmesser (Df) des Flanschabschnitts (12) ist, wobei der Rotations-Zylinder in der Lage ist, angezogen zu werden, so dass die rückwärtige Endoberfläche (15a) an der Endoberfläche (12a) des Flanschabschnitts (12) anstößt,
**dadurch gekennzeichnet, dass**
das Verhältnis (D2/D1) des äußeren Durchmessers (D2) der spitzen Endabschnittseite (15₂) mit kleinerem Durchmesser und dem äußeren Durchmesser (D1) der rückwärtigen Endabschnittseite (15₁) mit größerem Durchmesser in einem Bereich von 0,75 bis 0,85 ist, und
das Verhältnis (L1/L2) der axialen Länge (L1) der rückwärtigen Endabschnittseite (15₁) mit größerem Durchmesser und der axialen Länge (L2) der spitzen Endabschnittseite (15₂) mit größerem Durchmesser im Bereich von 0,60 bis 0,85 ist.

2. Spannfutter gemäß Anspruch 1, wobei der Spannfutter-Körper (10) an einer Ecke, in der die äußere Umfangsoberfläche (13a) des Spannfutter-Zylinders (13) die Frontseitenendfläche (12a) des Flanschabschnitts (12) schneidet, mit einer nuten-gleichen ausgesparten Absperrvorrichtung (14) versehen ist.

## Revendications

1. Mandrin comprenant un corps de mandrin (10) incorporant une portion de fût conique (11), une portion de bride (12) fixée sur une portion d'extrémité côté grand diamètre de ladite portion de fût conique (11) et un cylindre de mandrin (13), destiné à saisir et à fixer un outil, faisant saillie à partir de la portion de bride (12) sur le côté extrémité pointe du corps de mandrin (10) et ayant une surface périphérique extérieure conique (13a),
un cylindre rotatif de serrage (15) ayant une surface périphérique intérieure conique (15b) et étant monté extérieurement sur ledit cylindre de mandrin (13),
dans lequel une pluralité de roulements à aiguilles (16) sont disposés entre le cylindre de mandrin (13) et le cylindre rotatif (15) de façon à pouvoir provoquer un mouvement orbital à la manière d'une spirale du cylindre rotatif (15) par rapport au cylindre de mandrin (13),
dans lequel le cylindre rotatif (15) présente un côté de portion d'extrémité arrière (15₁) doté d'un diamètre (D1) plus grand que le diamètre (D2) d'un côté de portion d'extrémité de pointe (15₂) du cylindre rotatif, le diamètre (D1) sur la surface d'extrémité arrière (15a) dudit cylindre rotatif étant légèrement inférieur ou égal à un diamètre extérieur (Df) de la partie de bride (12), ledit cylindre rotatif pouvant être serré pour venir en butée sur la surface d'extrémité arrière (15a) avec une surface d'extrémité (12a) de ladite portion de bride (12),
**caractérisé en ce que**,
le rapport (D2/D2) du diamètre extérieur (D2) du côté de ladite portion d'extrémité de pointe de plus petit diamètre (15₂) et le diamètre extérieur (D1) dudit côté de portion d'extrémité arrière de plus grand diamètre (15₁) se situe à l'intérieur de la plage 0,75 à 0,85 et
le rapport (L1/L2) de la longueur axiale (L1) dudit côté de portion d'extrémité arrière de plus grand diamètre (15₁) et la longueur axiale (L2) dudit côté de portion d'extrémité de pointe de plus petit diamètre (15₂) se situe à l'intérieur de la plage de 0,60 à 0,85.

2. Mandrin selon la revendication 1, dans lequel le corps de mandrin (10) est doté d'une découpe (14) évidée en forme de gorge en un coin dans lequel la surface périphérique extérieure (13a) du cylindre de mandrin (13) vient en intersection avec la face d'extrémité latérale avant (12a) de la portion de bride (12).
